# EUROPEAN PATENT APPLICATION

(11) **EP 4 483 994 A1**
(43) Date of publication of application: **01.01.2025**
(21) Application number: 22928333.8
(22) Date of filing: 29.11.2022
(51) Int. Cl.: B01D 69/08, B01D 71/00, C01B 23/00

(54) **HOLLOW FIBER SEPERATION MEMBRANE, PREPARATION METHOD THEREFOR AND APPLICATION THEREOF**

(30) Priority: 23.02.2022 CN 202210166344; 20.07.2022 CN 202210857961
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: WU, Changjiang, Beijing 100013 (CN); WEI, Xin, Beijing 100013 (CN); LIU, Yiqun, Beijing 100013 (CN); DING, Liming, Beijing 100013 (CN); LI, Hesheng, Beijing 100013 (CN); XU, Yixiao, Beijing 100013 (CN); XI, Renjie, Beijing 100013 (CN); WANG, Yujie, Beijing 100013 (CN); TANG, Anqi, Beijing 100013 (CN); ZOU, Qi, Beijing 100013 (CN)
(74) Representative: Hoffmann Eitle
(86) International application number: PCT/CN2022/134854
(87) International publication number: WO 2023/160073

(57) **Abstract**

The invention relates to the technical field of membrane separation, and discloses a hollow fiber membrane and preparation method and use thereof. The hollow fiber membrane includes a support, a selective layer, and a transition layer between the support and the selective layer, wherein at least a portion of the transition layer is embedded in the support. The hollow fiber membrane has a high selectivity and good mechanical properties.

## Description

### Technical Field

The invention relates to the technical field of membranes, in particular to a novel hollow fiber membrane and preparation method and use thereof.

### Backgrounds

Helium and hydrogen are gases with smaller molecules and are both very important industrial gases.

Helium is mainly prepared by purifying the associated gas during extraction of natural gas and shale gas. The processes for extracting helium from natural gas and shale gas are divided into cryogenic process and non-cryogenic process. The cryogenic process currently is a commonly used method in industrialization. Industrial processes with temperatures below - 100°C are generally classified as cryogenic processes, wherein the extraction of helium from natural gas and the liquefaction of helium are typical cryogenic processes with the lowest cryogenic separation temperature in cryogenic processes for natural gas. The cryogenic helium extraction process has high energy consumption and complex devices. Membrane separation helium purification and refining technology avoids various phase change processes and violent chemical reactions, and has low energy consumption, small devices and high safety.

Hydrogen is a clean energy carrier and is also a secondary energy source. The product of hydrogen production from fossil fuel contains N₂, CO, CH₄, CO₂ and the like, and needs to be separated and purified. With the increasing global demand for clean and efficient energy source, the production and purification of hydrogen are also receiving more and more attention.

In order to meet the requirements for helium and hydrogen, the development of efficient, green, safe and reliable helium and hydrogen purification methods is urgently needed. The demand of membrane separation technology for key membrane materials, especially high-end membrane materials, is particularly urgent.

CN113318609A discloses a method for manufacturing a rigid network microporous hydrogen membrane with high permeability and selectivity. However, the membrane of this application has limited selectivity for hydrogen and cannot produce high purity hydrogen or helium products.

CN112142980B discloses a hyperbranched polybenzimidazole-polysiloxane block copolymer and preparation method and use thereof. The block copolymer constructs a proton transmission channel through the phase separation structure of the two segments since the block copolymer form a soft-hard, hydrophilic-hydrophobic phase separation structure due to the combination of soft segment of PDMS with hard segment of HBPBI and hydrophobic segment of PDMS with hydrophilic segment of HBPBI, and the hyperbranched structure of HBPBI can accommodate more phosphoric acid, and finally a high proton conductivity is obtained. However, this material is insufficient in strength and elongation at break, and cannot be used to prepare a high-pressure-resistant gas separation membrane.

US20160375410A1 discloses a method for making PBI asymmetric hollow fiber membrane and use thereof, wherein the PBI asymmetric hollow fiber membrane prepared by non-solvent induced phase separation technology in this application has a permeance of 108 GPU, a selectivity of H₂/CO₂ of 23.7, and a selectivity of H₂/N₂ of 129 at 250 °C. However, the membrane is easy to generate defects during the phase inversion process, the selectivity will be greatly influenced, and the real separation effect of PBI cannot be achieved.

Therefore, the development of a membrane material which has a dense selective layer, is convenient to prepare and can exhibit the high separation effect of PBI has great significance.

### Summary of Invention

The invention aims to provide a novel hollow fiber membrane and preparation method and use thereof, so as to overcome the problems that the surface of hollow fiber membrane prepared by non-solvent induced phase separation is easy to have defects or the material strength and elongation at break are insufficient and cannot be used to prepare a high-pressure-resistant gas separation membrane in the prior art. The hollow fiber membrane of present application has high selectivity and good mechanical properties.

In order to achieve above object(s), one aspect of the present application provides a hollow fiber membrane characterized in that the membrane comprises a support, a selective layer, and a transition layer between the support and the selective layer, wherein at least a portion of the transition layer is embedded in the support.

According to some embodiments, in the hollow fiber membrane of the present application, the transition layer and the selective layer comprise the same polymer; preferably, the transition layer and the selective layer comprise the same polymer and the transition layer and the selective layer are formed from the same casting solution; more preferably, the transition layer and the selective layer comprise the same polymer, the transition layer and the selective layer are formed from the same casting solution, and the transition layer and the selective layer are formed by non-solvent induced phase separation and thermally induced phase separation, respectively. According to some embodiments, the transition layer has a porous structure (porous). According to some embodiments, the transition layer is porous and the selective layer is a dense layer.

Another aspect of the invention provides a hollow fiber membrane, wherein the membrane comprises a support, a selective layer attached to the outer surface of the support and a transition layer embedded in the support; the support is a microporous hollow fiber membrane, the transition layer has a porous structure, the selective layer is made of polybenzimidazole, and the number-average molecular weight of the polybenzimidazole is 5×10⁴-30×10⁴.

One aspect of the present application provides a method for preparing a hollow fiber membrane, characterized in that the method comprising:
(1) preparing a casting solution comprising a polymer;
(2) coating the casting solution onto a support, wherein a portion of the casting solution permeates into the support, so as to obtain a primary film coated on the support;
(3) heating the primary film to form a selective layer; and
(4) injecting a bore fluid into the inner tube of the support to induce non-solvent induced phase separation of the casting solution permeated into the support to generate a transition layer.

Optionally, the method for preparing hollow fiber membrane of the present invention further comprises heating to remove substantially all of the solvent after the generation of the transition layer.

A further aspect of the present invention provides a method for preparing a hollow fiber membrane, wherein the method comprises:
(1) mixing polybenzimidazole, an acid (solvent), optionally a volatile solvent and optionally an additive to obtain a casting solution; wherein the number-average molecular weight of the polybenzimidazole is 5×10⁴-30×10⁴;
(2) extruding the casting solution, feeding the extruded casting solution into a spinneret, and coating the casting solution onto a support by a doctor blade while pulling the support from bottom to top through the interior of the spinneret, so as to obtain a primary film attached to the support, wherein a portion of the casting solution permeates into the support;
(3) heating the primary film to form a polybenzimidazole selective layer with a dense structure; and injecting a non-solvent as bore fluid into the inner tube of the support through a core tube, to induce non-solvent induced phase separation of the portion of casting solution permeated into the support to generate a transition layer with a porous structure; and then fully drying to obtain the hollow fiber membrane.

One aspect of the present invention provides hollow fiber membranes prepared by the aforementioned methods.

Another aspect of the invention provides the use of the hollow fiber membrane of the invention for the separation and purification of helium/nitrogen, helium/methane, hydrogen/nitrogen or hydrogen/methane.

A still further aspect of the invention provides a method for purifying helium from a helium-containing gas, the method comprising performing membrane separation using the hollow fiber membrane of the present application or the hollow fiber membrane prepared by the method of the present application.

The invention can provide the following beneficial effects through above technical solutions:
(1) the phase inversion of the polybenzimidazole material is achieved by volatilization of solvent in the coated layer to generate an outer selective layer with separation property;
(2) the mechanical properties of the gas separation membrane are improved by internal support reinforcement, and the demand of a high-temperature, high-pressure and high-flow-rate gas separation system and the like on the mechanical properties of the membrane fiber can be met, expanding the applications of the gas separation membranes;
(3) the permeation of casting solution into the support is achieved, and a transition layer with a porous structure is obtained by non-solvent induced phase separation induced by a bore fluid, so that the selective layer is prevented from falling off;
(4) the thickness of the outer selective layer can be controlled by the means of the present invention during spinning process.

When polybenzimidazole is used as the polymer for preparing the casting solution, the polybenzimidazole is dissolved by an acid and optionally a volatile solvent. The resulting hollow fiber membrane adopts acid as solvent, such that the polymer is protonated during the process of dissolving the polymer, controlling the packing of molecular chains in the membrane-forming process, and inhibiting the formation of intermolecular hydrogen bonds, so as to prepare a separation membrane with both high selectivity and high permeation permeance.

### Brief description of drawings

FIG. 1 is a schematic representation of the structure of a spinneret used in the production of the primary film and the transition layer of the present invention;
FIG. 2 is a schematic representation of a process of the present invention for producing the primary film and the transition layer using the spinneret of FIG. 1;
FIG. 3 is an overview cross-sectional SEM image of the hollow fiber membrane prepared in Example 1 of the present invention;
FIG. 4 is a cross-sectional SEM image of the selective layer of the hollow fiber membrane prepared in Example 1 of the present invention;
FIG. 5 is a cross-sectional SEM image of the inner surface of the hollow fiber membrane prepared in Example 1 of the present invention;
FIG. 6 is an SEM image of the outer surface of the hollow fiber membrane prepared in Example 1 of the present invention;
FIG. 7 is an SEM image of the inner surface of the hollow fiber membrane prepared in Example 1 of the present invention;
FIG. 8 is SEM images of the hollow fiber membrane prepared in Example 4 of the present invention;
FIG. 9 is SEM images of the hollow fiber membrane prepared in Example 5 of the present invention;
FIG. 10 is SEM images of the hollow fiber membrane prepared in Comparative Example 1; and
FIG. 11 is a schematic illustration of a method of the present invention for purifying helium from a helium-rich gas.

### Detailed Description

The endpoints of ranges and any values disclosed herein are not limited to the precise ranges or values, but these ranges or values are to be understood to include values close to said ranges or values. For numerical ranges, the endpoint values of various ranges, the endpoint values of various ranges and individual point values, and the individual point values can be combined with each other to obtain one or more new numerical ranges, and these new numerical ranges shall be deemed to be concretely disclosed herein.

Reference in this specification to "an embodiment" or "some embodiments" means that a feature, structure or characteristic described in connection with said embodiment(s) is included in at least one embodiment. These features, structures or characteristics can be combined in any suitable manner in one or more embodiments.

As described above, the present invention provides a hollow fiber membrane, characterized in that the membrane comprises a support, a selective layer, and a transition layer between the support and the selective layer, wherein at least a portion of the transition layer is embedded into the support.

In the present invention, the support is tubular and the tube wall of the support has pores and/or apertures. At least a portion of the transition layer is embedded in the pores and/or apertures of the tube wall of the support.

In the present invention, the transition layer and the selective layer comprise the same polymer. In some embodiments, the transition layer and the selective layer are formed by the same polymer.

In some embodiments, the polymer comprised in the transition layer and the selective layer or the polymer forming the transition layer and the selective layer is polybenzimidazole.

Preferably, in some embodiments, the transition layer and the selective layer comprise the same polymer and the transition layer and the selective layer are formed from the same casting solution. More preferably, in some embodiments, the transition layer and the selective layer comprise the same polymer, the transition layer and the selective layer are formed from the same casting solution, and the transition layer and the selective layer are formed by non-solvent induced phase separation and thermally induced phase separation, respectively.

Non-solvent induced phase separation and thermally induced phase separation are well-known in the art.

In the present invention, the selective layer is a dense layer with selectivity, and the transition layer is a layer for cohering the selective layer and the support.

In some embodiments, the present invention provides a hollow fiber membrane, wherein the membrane comprises a support, a selective layer attached to the outer surface of the support and a transition layer embedded in the support; the support is a microporous hollow fiber membrane, the transition layer has a porous structure, the selective layer is made of polybenzimidazole, and the number-average molecular weight of the polybenzimidazole is 5×10⁴-30×10⁴.

Polybenzimidazole (PBI) is a heterocyclic polymer with imidazole rings in main chain, and this type of polymer has good chemical stability, thermal stability, hydrolysis resistance stability and mechanical stability. As a polymer material, PBI has good processability, and PBI membrane is easy to package and the preparation cost is reasonable. PBI is particularly suitable for preparing separation membranes required for hydrogen or helium purification.

In present invention, the volatilization of solvent is promoted by adopting a high-temperature normal-pressure or reduced-pressure drying, such that the polymer selective layer such as the polybenzimidazole selective layer has a good compactness, avoiding the formation of defects, and obtaining a better separation performance. In addition, the internal support reinforcement is adopted in present invention, which improves the mechanical properties of the gas separation membrane, and the demand of a high-temperature, high-pressure and high-flow-rate gas separation system and the like on the mechanical properties of membrane can be met, expanding the applications of gas separation membranes. In present invention, the transition layer with a porous structure is obtained by non-solvent induced phase separation induced by a bore fluid, so that the selective layer is prevented from falling off.

In the case where the selective layer comprises polybenzimidazole, the present invention uses an organic acid and optionally a volatile solvent to prepare the casting solution, and the surface selective layer of the resulting hollow fiber composite membrane comprises or consists of protonated polybenzimidazole, thereby achieving a higher selectivity.

In the present invention, the transition layer is obtained by non-solvent induced phase separation of the casting solution. In a preferred embodiment, the transition layer is obtained by non-solvent induced phase separation of a polybenzimidazole-containing acid solution.

In the present invention, the selective layer and the transition layer can be formed from the same casting solution. In some embodiments, the selective layer and the transition layer are formed from the same primary film, wherein the transition layer is formed by non-solvent induced phase separation and the selective layer is formed by thermally induced phase separation.

In the present invention, the transition layer has a porous structure. In the present invention, the selective layer is a dense layer.

According to the present invention, preferably, the polymer contained in or forming the transition layer and the selective layer is polybenzimidazole. The polybenzimidazole can have a number-average molecular weight of from 5×10⁴ to 30×10⁴; preferably, the polybenzimidazole can have a number-average molecular weight of from 5.6×10⁴ to 20×10⁴ or from 8×10⁴ to 28.7×10⁴.

According to the present invention, preferably, the polybenzimidazole comprises one or more structural units represented by formulae (A1) to (A8);

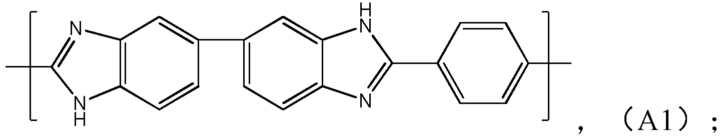

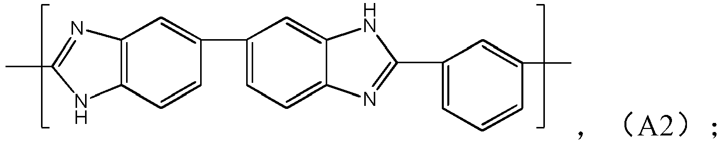

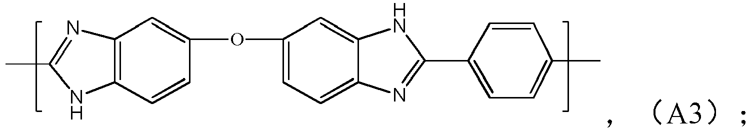

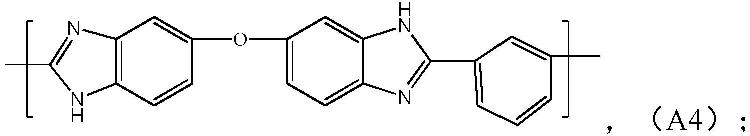

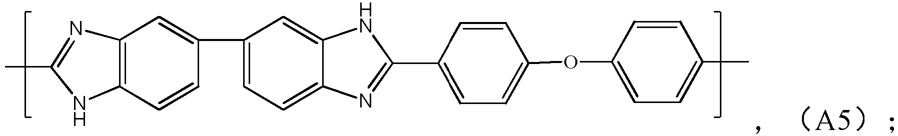

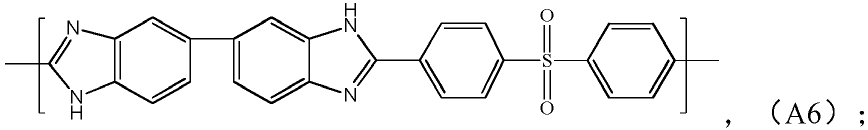

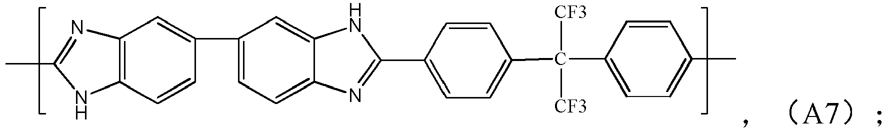

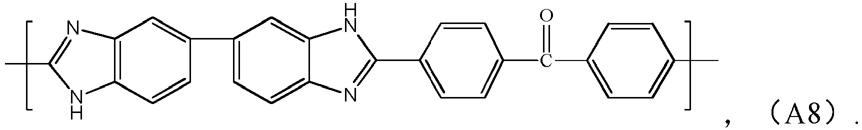

According to the present invention, preferably, the polybenzimidazole comprises one or more of the structural units represented by formulae (A5) to (A8).

According to the present invention, the support can be a fiber braided tube or a hollow fiber membrane, preferably a microporous hollow fiber membrane. The microporous hollow fiber membrane can be a microporous hollow fiber membrane prepared from a polymer material which cannot be dissolved by the acid used for preparing the casting solution by a method such as thermally induced phase separation, melt stretching and the like. The support can be one or more selected from the group consisting of a fiber braided tube, a microporous polypropylene hollow fiber membrane, a microporous polyethylene hollow fiber membrane, and a microporous inorganic hollow fiber membrane. Preferably, the microporous hollow fiber membrane is a microporous polypropylene hollow fiber membrane or a microporous polyethylene hollow fiber membrane prepared by a thermally induced phase separation method.

According to the present invention, the average thickness of the hollow fiber membrane of present invention can be 50-2000 µm or 100-2000 µm, preferably 150-1000 µm, and more preferably 180-500 µm.

According to the present invention, when the support is a microporous hollow fiber membrane, the porosity of the support can be 30 to 90%, preferably 50 to 80%. In some embodiments, the pore size of the support can be, for example, 10 nm to 20 µm. The porosity is measured by nitrogen adsorption method.

According to the present invention, the average thickness of the tube wall of the support can be 50-2000 µm or 100-2000 µm, preferably 300-1800 µm, and more preferably 500-1500 µm.

According to the present invention, the average thickness of the selective layer can be 100-50000 nm. Preferably, in some embodiments, the thickness of the selective layer can be 200-5000 nm.

According to the present invention, the average thickness of the transition layer can be 20-2000 µm, preferably 50-1500 µm, more preferably 20-1000 µm.

In the present invention, at least a portion of the transition layer is embedded into at least a portion of the support. In some embodiments, the diameter of the transition layer can be the same as the diameter of the support. In some embodiments, the transition layer can extend beyond the outer surface of the support. In some embodiments, the transition layer can extend beyond the inner surface of the support.

According to the invention, the transition layer is formed from the casting solution by non-solvent induced phase separation. In some embodiments, the transition layer is formed from a polybenzimidazole-containing acid solution by non-solvent induced phase separation.

The hollow fiber membrane of the present invention has excellent properties including, for example, breaking strength, permeance and selectivity.

According to the present invention, the breaking strength of the membrane is 10 to 500 MPa; preferably, the membrane has a breaking strength of 50 to 250 MPa; more preferably, the membrane has a breaking strength of 52 to 210 MPa.

According to the present invention, in some embodiments, the hollow fiber membrane of the present invention can have a pure helium permeance of 0.8-480 GPU, a pure hydrogen permeance of 0.8-580 GPU, a nitrogen permeance of 0.01-0.7 GPU, and/or a methane permeance of 0.01-0.7 GPU at 100 °C and 0.5 MPa test pressure; preferably, the pure helium permeance can be 3.48-477.5 GPU, the pure hydrogen permeance can be 3.03-79.6 GPU, the nitrogen permeance can be 0.016-0.68 GPU, and/or the methane permeance can be 0.0135-0.6 GPU.

According to the present invention, in some embodiments, the hollow fiber membrane of the present invention can have a selectivity of hydrogen/nitrogen of 110-300 or 110-235, and/or a selectivity of hydrogen/methane of 125-360 or 125-260 at 100 °C and 0.5 MPa test pressure; preferably, the hydrogen/nitrogen selectivity can be 110 to 234.1, and/or the hydrogen/methane selectivity can be 129.1 to 256.7.

According to the present invention, in some embodiments, the hollow fiber membrane of the invention can have a selectivity of helium/nitrogen of 140-390 or 140-190, and/or a selectivity of helium/methane of 170-500 or 170-175 at 100 °C and 0.5 MPa test pressure; preferably, the helium/nitrogen selectivity can be 141.4 to 187.5, and/or the helium/methane selectivity can be 170 to 173.8.

According to the present invention, in some embodiments, the hollow fiber membrane of the present invention can have a hydrogen/nitrogen selectivity of 200-550 and/or a hydrogen/methane selectivity of 200-860 at 25 °C and 0.5 MPa test pressure.

According to the present invention, in some embodiments, the hollow fiber membrane of the present invention can have a selectivity of helium/nitrogen of 240-900, and/or a selectivity of helium/methane of 200-2000 at 25 °C and 0.5 MPa test pressure.

The invention also provides a producing method for a hollow fiber membrane.

According to some embodiments, the method of the present invention for producing a hollow fiber membrane comprises:
(1) preparing a casting solution comprising a polymer;
(2) coating the casting solution onto a support, wherein a portion of the casting solution permeates into the support, so as to obtain a primary film coated on the support;
(3) heating the primary film to form a selective layer; and
(4) injecting a bore fluid into the support to induce non-solvent induced phase separation of the casting solution permeated into the support to generate a transition layer.

Casting solutions and preparation thereof are generally known in the art. For example, a casting solution can be prepared by dissolving a polymer in a solvent. The polymer can be the polymer mentioned above with respect to the hollow fiber membrane. Preferably, the polymer is polybenzimidazole. The solvent can be selected by those skilled in the art depending on the type of the polymer or the like. The solvent can be a single solvent or can be a mixture.

Optionally, the casting solution can further comprise one or more additives. The additives can be appropriately selected as needed by those skilled in the art.

In some embodiments, the amount of polymer is 4-18wt%, the amount of the solvent is 77-90wt%, and the amount of the additive is 0-5 wt%, based on the total weight of the casting solution. Preferably, in some embodiments, the amount of polymer is 8-15wt%, the amount of the solvent is 80-90wt%, and the amount of the additive is 1-2 wt%, based on the total weight of the casting solution.

After preparation of the casting solution, the casting solution is coated on a support. The support can be a support as described above. The coating can be conducted via various ways generally known in the art. For example, the support can be pulled through the casting solution so as to apply the casting solution to the support.

According to the present invention, the casting solution permeates into at least a portion of the support. In some embodiments, the casting solution permeates a portion of the tube wall of the tubular support, for example, the casting solution can permeate from 10% to 150% of the thickness of the tube wall of the support. In some embodiments, the casting solution can permeate greater than or equal to 10%, greater than or equal to 15%, greater than or equal to 20%, greater than or equal to 25%, greater than or equal to 30%, greater than or equal to 35%, greater than or equal to 40%, greater than or equal to 45%, greater than or equal to 50%, greater than or equal to 60%, greater than or equal to 70%, greater than or equal to 80%, greater than or equal to 90%, greater than or equal to 100%, greater than or equal to 110%, etc. of the thickness of the tube wall of the support. The range of the permeation of the casting solution into the tube wall of the support can be appropriately determined by those skilled in the art. The method of the present invention can make the casting solution that permeates into the tube wall of the support maintain or substantially maintain the permeation depth when it is converted into the transition layer (so that the embedding depth of the resulting transition layer in the support is the same as or substantially the same as the permeation depth of the casting solution), thereby ensuring that at least a portion of the transition layer formed by the casting solution in the finally obtained finished hollow fiber membrane is embedded into the support.

After the casting solution is coated on the support, a primary film coated on the support is obtained.

The primary film can then be heated to form a selective layer. In the present invention, the heating of the primary film causes thermally induced phase separation so as to form the outermost selective layer.

The heating promotes volatilization of the solvent in the casting solution so as to form a polymer selective layer. The heating can be performed by selecting a suitable temperature by those skilled in the art according to the solvent used. Optionally, the heating can be performed under normal pressure or reduced pressure. For example, hot air can be used for heating. In some embodiments, hot air can be used to conduct volatilization of the solvent. In the present invention, the heating temperature can be, for example, from 80 to 300 °C.

In the method of present invention, the thermally induced phase separation proceeds to the stage that phase separation occurs merely in the outermost portion of the primary film (thereby forming the selective layer), but no phase separation occurs in the inner portion of the primary film. In particular, the casting solution permeated into the support remains in liquid state and no thermally induced phase separation occurs.

After the primary film is heated to form the selective layer, a bore fluid can be injected into the support (i.e., into the inner tube of the tubular support), and the bore fluid causes non-solvent induced phase separation of the casting solution that has permeated into the support so as to form the transition layer. In some embodiments, for example, the bore fluid can be injected after the desired selective layer is obtained. In the present invention, the injection of the bore fluid can be performed at room temperature and normal pressure.

The bore fluid can be selected by those skilled in the art according to the composition of the casting solution, the material of the support, and the like, as long as the casting solution can undergo non-solvent induced phase separation.

In the method of the present invention, optionally, the hollow fiber membrane can be heated after the generation of the transition layer to (substantially) remove all the solvent. The heating can be carried out under normal pressure or reduced pressure. The heating can be performed by selecting a suitable temperature by those skilled in the art according to the solvent used. For example, hot air can be used for heating. In some embodiments, the same temperature as used in step (3) above can be used in this step. For example, the temperature can be 80-300 °C.

In the method of the present invention, the dense selective layer and the porous transition layer are formed from the same casting solution in two different ways, which makes the selective layer and the transition layer to be integral. The method of the invention allows the transition layer to be kept in the support (i.e. embedded in the support) so as to connect firmly the selective layer to the support, avoiding the selective layer to fall off. Furthermore, the method of the present application enables the transition layer to be porous, which can further contribute to connect firmly the selective layer to the support.

The selective layer in the present application is dense, but the transition layer is porous. As will be appreciated by those skilled in the art, there may be a transitional region when transition from the dense selective layer to the porous transition layer. In the present application, the transition region (if present) is deemed as part of the transition layer.

The hollow fiber membranes produced by the method of the present invention also provide advantageous membrane properties including, for example, permeance and/or selectivity.

According to some embodiments, the method of the present invention for producing a hollow fiber membrane comprises:
(1) mixing polybenzimidazole, an acid, optionally a volatile solvent and optionally an additive to prepare a casting solution comprising a polymer;
(2) coating the casting solution on a support, wherein a portion of the casting solution permeates into at least a portion of the support, so as to obtain a primary film coated on the support;
(3) heating the primary film to form a selective layer; and
(4) injecting a bore fluid into the support to induce non-solvent induced phase separation of the casting solution permeated into the support to generate a transition layer.

According to some embodiments, the method of the present invention for producing a hollow fiber membrane comprises:
(1) mixing polybenzimidazole, an acid, optionally a volatile solvent and optionally an additive to obtain a casting solution; wherein the number average molecular weight of the polybenzimidazole is 5×10⁴-30×10⁴;
(2) using a spinneret for preparing the primary film and the transition layer; and using a microporous hollow fiber membrane as the support;
(3) extruding the casting solution out, feeding the extruded casting solution into the spinneret, and coating the casting solution onto the support by a doctor blade while pulling the support from bottom to top through the interior of the spinneret, so as to obtain the primary film attached to the support, wherein a portion of the casting solution permeates into the support;
(4) heating the primary film to form a polybenzimidazole selective layer with a dense structure; and injecting a non-solvent as bore fluid into the support through a core tube, to promote non-solvent induced phase separation of the portion of casting solution permeated into the support to generate the transition layer with a porous structure; and then heating to remove the solvent to obtain the hollow fiber membrane.

According to the present invention, preferably, the polybenzimidazole has a number average molecular weight of 5×10⁴ to 30×10⁴ or 5×10⁴ to 28.7×10⁴, more preferably the polybenzimidazole has a number average molecular weight of 8×10⁴ to 28.7×10⁴ or 5.6×10⁴ to 20×10⁴.

According to the present invention, the polybenzimidazole comprises one or more of the structural units represented by formulas (A1) to (A8);

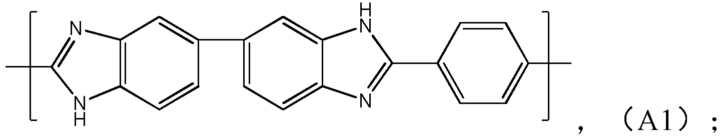

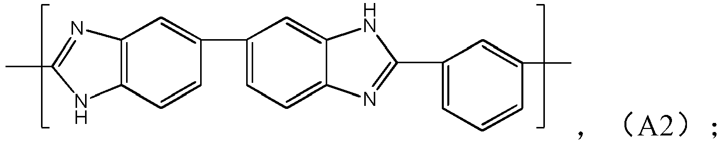

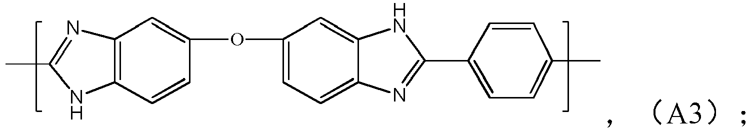

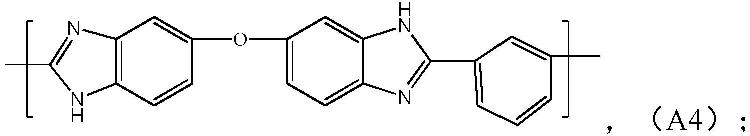

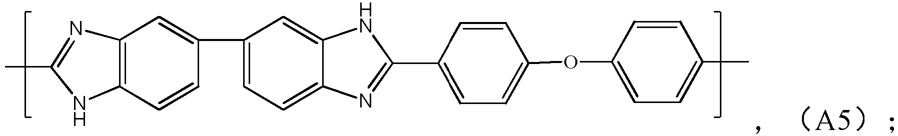

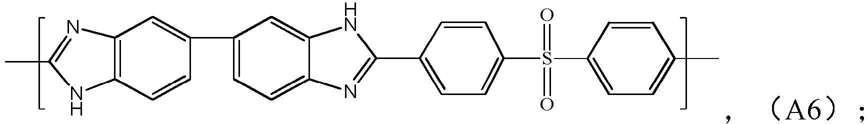

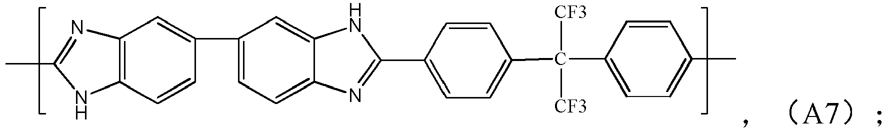

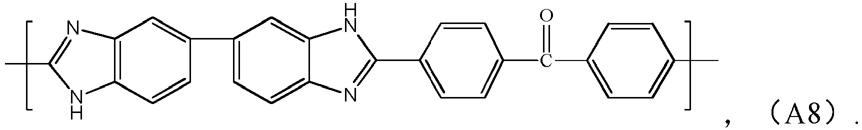

According to the present invention, preferably, the polybenzimidazole comprises one or more of the structural units represented by formulas (A5) to (A8).

According to the present invention, the polybenzimidazole and the support can be the same as those described above with respect to the hollow fiber membrane.

Optionally, in the present invention, the support can be modified before coating. There are not particular limits to the modification methods. For example, the modification can include blending the material to be used to prepare the support, for example using a polymer blend; subjecting the support to chemical treatment, physical deposition, ultraviolet irradiation, thermal treatment, mechanical treatment, or the like.

The inventors of the present invention found that: preferably, polybenzimidazole is protonated in the dissolving process by using a combination of organic acid and volatile solvent, inhibiting the formation of intermolecular hydrogen bonds and increasing the flexibility of polymer molecular chains, the polymer is easy to accumulate more closely in the membrane-forming process, and the resulting hollow fiber composite membrane has a high selectivity. On the other hand, the volatilization of the solvent is promoted by using high-temperature and high-pressure film coating and high-temperature normal-pressure/reduced-pressure drying, so that the polybenzimidazole selective layer has a good compactness, avoiding the formation of defects and obtaining a better separation performance. In addition, the mechanical properties of the gas separation membrane are improved by the internal support reinforcement, and the demands of a high-temperature, high-pressure and high-flow-rate gas separation system and the like on the mechanical properties of the membrane can be met, expanding the applications of the gas separation membranes. Moreover, the transition layer with a porous structure is obtained by non-solvent induced phase separation caused by the bore fluid, and the selective layer is prevented from falling off.

According to the present invention, in some embodiments, the acid is a monoacid. Preferably, the acid is one or more selected from the group consisting of hydrochloric acid, hydrofluoric acid and methanesulfonic acid. More preferably, the acid is methanesulfonic acid. It is believed that, during the film-forming process, the organic acid induces the occurring of protonation, inhibits the formation of intermolecular hydrogen bonds between polymer molecules, reduces the rigidity of the polymer, and allows polymer molecular chains to be more closely accumulated, thereby improving the separation performance of small molecular gases such as hydrogen, helium and the like.

According to the present invention, the bore fluid can be one or more of water, ethanol, methanol, isopropanol, acetone, and tetrahydrofuran.

According to the present invention, the volatile solvent can be ethanol and/or tetrahydrofuran.

According to the present invention, the additive can be one or more selected from the group consisting of lithium nitrate, calcium chloride, sodium chloride, potassium chloride, polyethylene glycol, and polyethylene oxide. Preferably, the additive is selected from lithium nitrate and/or potassium chloride.

According to the present invention, in some embodiments, the amount of polybenzimidazole is 4-18wt%, the amount of the acid is 77-90wt%, the amount of the volatile solvent is 0-10wt% and the amount of the additive is 0-5 wt%, based on the total weight of the casting solution; preferably, the amount of polybenzimidazole is 8-15wt%, the amount of the acid is 80-90wt%, the amount of the volatile solvent is 1-5wt% and the amount of the additive is 1-2 wt%, based on the total weight of the casting solution. In the present invention, it should be noted that the sum of the components of polybenzimidazole, acid, volatile solvent and optional additive is 100 wt%.

In some embodiments, the casting solution can be obtained by adding polybenzimidazole into the acid and adding volatile solvent (if used) and additive (if used), and mixing. Optionally, stirring and heating can be performed during the mixing. In some embodiments, the conditions of the mixing can include: temperature 25-160 °C, and time period 2-72 h; preferably, the temperature is 80-160 °C and the time period is 12-48 h. The stirring is not particularly limited and can be conventionally selected by those skilled in the art. Preferably, the stirring rate of the stirring can be 20 to 500 rpm.

After the casting solution is prepared, the casting solution is coated on the surface of the support. In some embodiments, the casting solution can be blade coated onto the surface of the support. According to the present invention, the casting solution can be blade coated onto the surface of the support at certain temperature and pressure to obtain a primary film with a certain thickness. The blade coating conditions can include: temperature 60-250 °C, preferably 80-180 °C. In the present invention, the blade coating pressure is not particularly limited. Preferably, the pressure can be 10-2000 KPa, and more preferably, the pressure can be 500-1200 KPa.

In the present invention, the thickness of the primary film, and in turn the thickness of the selective layer, can be controlled by controlling the distance between the doctor blade and the outer wall of the support during the blade coating process. In some embodiments, the thickness of the blade coated film (primary film) (the distance between the doctor blade and the outer wall of the support) can be 10-300 µm. Of course, the spacing distance between the doctor blade and the outer wall of the support can be adjusted by the person skilled in the art according to the desired thickness of the primary film.

In some embodiments, the casting solution is extruded into the spinneret, wherein the casting solution contacts the support inside the spinneret. The contact time is not particularly limited. For example, the contact time can be 1 to 15 seconds, and preferably, the contact time is 1 to 10 seconds. In the present invention, the pressure is not particularly limited. For example, the pressure can be 10-2000 KPa. For example, the pressure can be 0 to 0.2 MPa (gauge pressure). For example, the pressure can be 0.02 to 0.1 MPa (gauge pressure).

According to the present invention, after the casting solution is coated (for example, blade coated) onto the support, the support to which the primary film is attached can be pulled and sent into a heating apparatus. The solvent in the outer layer of the primary film is volatilized by heating to form the polymer selective layer, such as polybenzimidazole selective layer, attached to the support. The heating can be performed by hot air, for example. The heating can be carried out under normal pressure or reduced pressure. For example, the heating can be carried out at -0.1 MPa to 0 MPa (gauge pressure). In some embodiments, conditions for facilitating solvent volatilization by heating can include: temperature 80-300 °C. In some embodiments, the heating can be performed by using hot air. The heating conditions can be appropriately selected by those skilled in the art depending on the solvent used, the desired volatilization rate, and the like. In the present invention, the apparatus for heating is not particularly limited; for example, it can be an oven. In some embodiments, the heating temperature can be 100-280 °C and time period can be 2-24 h; preferably, the heating temperature is 120-150 °C, and the time period is 5-12 h.

After the outermost polymer selective layer is formed by heating, a bore fluid can be injected into the support; the bore fluid induces non-solvent induced phase separation of the casting solution permeated into the support to generate a transition layer. The bore fluid is for example the bore fluid described above.

In the method of the present invention, optionally, the hollow fiber membrane can be heated after the generation of the transition layer to remove (substantially) all the solvent. The heating can be carried out under normal pressure or reduced pressure. The heating can be performed by selecting a suitable temperature by those skilled in the art according to the solvent used. For example, hot air can be used for heating. For example, the heating temperature can be 80 to 300 °C.

In the present invention, optionally, the method can further include removing residual solvent from the resulting finished membrane by washing step, for example, water washing, ethanol washing, and the like.

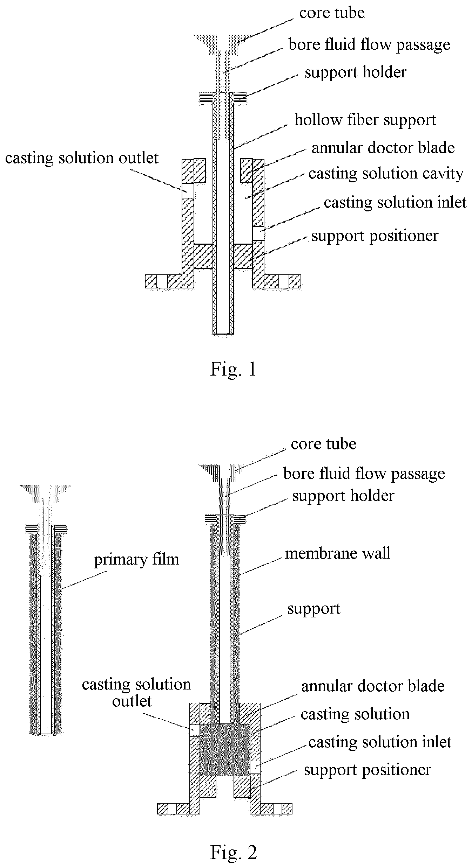

FIG. 1 is a schematic representation of the structure of a spinneret used in the production of the primary film and the transition layer of the present invention. FIG. 2 is a schematic representation of a process of the present invention for producing the primary film and the transition layer using the spinneret of FIG. 1.

Referring to FIG. 1 and FIG. 2, the spinneret includes a support positioner, an annular doctor blade, and a core tube. The support positioner surrounds the support and is located at one end of a casting solution cavity for containing casting solution. A casting solution inlet and a casting solution outlet are arranged on the casting solution cavity. Preferably, the casting solution outlet is higher than the casting solution inlet. The support positioner is arranged at one end of the casting solution cavity and forms a sealed end, and the annular doctor blade is arranged at the other end of the casting solution cavity. The diameter of the annular doctor blade is larger than the width of the support positioner, and the gap formed by the difference of the diameters of the annular doctor blade and the support positioner can be used for forming the primary film. Also shown in FIG. 1 is a support holder for holding the support and pulling the support through the casting solution cavity. Also shown in FIG. 1 is the core tube. The core tube can be inserted into the inner tube of the support, and injects the bore fluid to form a bore fluid flow inside the support. After the bore fluid is injected via the core tube, the bore fluid induces the non-solvent induced phase separation to obtain the transition layer with porous structure, avoiding the falling off of the selective layer.

Referring to FIG. 2, a process for producing the primary film and the transition layer using the spinneret of FIG. 1 is described. First, a support is selected and the support is fixed using the support positioner. The casting solution extruded from a double-screw extruder or a gear pump is fed into the casting solution cavity through the casting solution inlet. The support is pulled from bottom to top through the casting solution cavity and is blade coated by the annular doctor blade; and a portion of the casting solution permeates into the support. The primary film attached to the support is obtained after leaving the annular doctor blade. Excess casting solution flows out through the casting solution outlet. After leaving the annular doctor blade, the support with the attached primary film is pulled and sent into a heating apparatus, and the outer layer of the primary film is heated (e.g., heated by hot air) to promote volatilization of solvent, thereby forming the polymer selective layer, e.g., a polybenzimidazole selective layer, attached to the surface of the support. Then, the core tube is placed in the support, and the bore fluid is injected into the support through the core tube, obtaining the transition layer with a porous structure from the casting solution permeated into the support by non-solvent induced phase separation induced by the bore fluid. The transition layer is embedded in the support and is integral with the selective layer, which prevents the selective layer from falling off.

The present invention also provides hollow fiber membranes prepared by the method described above. In some embodiments, the hollow fiber membrane of the present invention is prepared by the method of the present invention for producing hollow fiber membrane.

**The hollow** fiber membrane of the present invention can be used for gas separation. Accordingly, the present invention also provides the use of the hollow fiber membrane of the present invention for the separation of helium/nitrogen, helium/methane, hydrogen/nitrogen and/or hydrogen/methane. The hollow fiber membrane of the present invention can be used to separate gases by using operations generally known in the art.

The present invention also provides a method for purifying helium from a helium-rich gas, wherein the method comprises performing membrane separation on the gas by using the hollow fiber membrane of the present invention.

In some embodiments, the method for purifying helium from a helium-rich gas can comprise: carrying out condensation treatment through a cryogenic process, catalytic dehydrogenation treatment, membrane separation treatment and pressure swing adsorption impurity removal treatment on the helium-rich gas so as to obtain purified helium. Wherein the membrane separation treatment comprises using the hollow fiber membrane of the present invention.

In some embodiments, the method for purifying helium from a helium-rich gas can comprise: carrying out condensation treatment through a cryogenic process, catalytic dehydrogenation treatment, membrane separation treatment through helium separation membrane and pressure swing adsorption impurity removal treatment on the helium-rich gas so as to obtain purified helium; wherein the conditions of the condensation treatment include: temperature ≥ -220°C. Wherein the membrane separation treatment comprises using the hollow fiber membrane of the present invention.

The method for purifying helium of present invention has the following advantages:
(1) the helium produced can be of high purity, for example up to 4N grade (99.99%) or even higher; and the helium-extraction efficiency can be improved greatly;
(2) the cryogenic process has a high temperature which reduces energy **consumption.**

In some embodiments, the conditions of the condensation treatment can include a temperature of ≥ -220°C. In some embodiments, the conditions of the condensation treatment can include: temperature -210°C to -150 °C, and pressure 0.2 MPa to 10 MPa; preferably, the conditions of the condensation treatment include: temperature -180°C to -150 °C, and pressure 3 MPa-10 MPa.

According to the present invention, there are no specific limitations on the helium-containing gas and there are no specific limitations on the composition of the helium-containing gas, and the method of the present invention has universal applicability. In some embodiments, the helium-containing gas can include natural gas, oilfield associated gas, or the like. In some embodiments, the helium-containing gas can comprise helium, nitrogen, methane, hydrogen, and carbon dioxide. In some embodiments, the content of helium can be 5 to 40%by volume, based on the total volume of the helium-rich gas; preferably, the content of helium can be 15 to 30 vol%.

According to the present invention, the helium-rich gas also comprises optional oxygen and water, and oxygen content is 0-8% by volume and water content is 0-2% by volume, based on the total volume of the helium-rich gas.

According to the present invention, the helium-rich gas is subjected to condensation treatment to achieve the effect of liquefying impurities such as nitrogen, methane, oxygen, light hydrocarbons and the like, and nitrogen, methane, oxygen and CO₂ are removed partially to obtain a second mixed gas.

According to the present invention, the second mixed gas is subjected to catalytic dehydrogenation treatment to remove a portion of hydrogen, so as to obtain a third mixed gas.

According to the present invention, the conditions of the catalytic dehydrogenation treatment can include: temperature 60 to 120 °C, preferably 60 to 110 °C, more preferably 62 to 106 °C. The catalytic dehydrogenation treatment is carried out in the presence of oxygen and a catalyst, wherein the catalyst is a noble metal catalyst, preferably the catalyst is selected from Pt, Pb, Rh, Ru or Au; more preferably, the catalyst is selected from Pt, Pb or Au.

According to the present invention, the third mixed gas is subjected to the membrane separation treatment of the invention to remove a portion of nitrogen, methane, oxygen and CO₂, to obtain a fourth mixed gas.

According to the present invention, the membrane separation achieves the separation of helium by utilizing the difference of permeability of each component in the feed gas in the processes of dissolution, diffusion and desorption under the driving of the pressure difference at two sides of the membrane. The conditions of the membrane separation treatment can include: the membrane separation positive pressure side pressure being greater than the membrane separation permeation side pressure; wherein the membrane separation positive pressure side pressure can be 0.2-10 MPa; preferably, the membrane separation positive pressure side pressure is 0.5-10 MPa; more preferably, the membrane separation positive pressure side pressure is 3-10 MPa. The membrane separation method has the advantages of simple operation, low energy consumption and low apparatus construction and operation cost.

According to the present invention, the membrane separation can adopt one-stage or multi-stage membrane separation to purify helium. In the membrane separation, the multi-stage membrane separation means that the permeation side gas is pressurized and is used as feed gas again to undergo membrane separation, and the process can be 1 to 5 stages.

According to the present invention, the fourth mixed gas is subjected to adsorption impurity removal treatment to remove a portion of nitrogen, methane, oxygen, hydrogen and CO₂, so as to obtain the purified helium; wherein the content of helium can be 99.986-99.996% by volume, based on the total volume of purified helium.

According to the present invention, the conditions of the pressure swing adsorption impurity removal treatment can include: adsorption pressure 0.2-15 MPa, preferably 10-15 MPa. In the present invention, the adsorbent used in the adsorption impurity removal treatment can be one or more selected from activated carbon, molecular sieve, metal organic framework material MOF, and activated alumina.

In the present application, the pressures are gauge pressures unless otherwise specified.

The present invention will be described in detail below by way of Examples.

In the following Examples and comparative Examples:
Polybenzimidazoles were purchased from Shanghai Shengjun Polymer Co., Ltd; other reagents/agents were purchased from Beijing InnoChem Science & Technology Co., Ltd.. Wherein, ethanol 99.9%; hydrochloric acid 12 mol/L; methanesulfonic acid 99.0%; and tetrahydrofuran 99.9%.

Permeance (unit GPU) test method: the gas flow rate per unit membrane area per unit time at a specific pressure difference at a specific temperature is measured. Wherein 1GPU =10⁻⁶ cm³(STP)/(cm²·s·cmHg).

Selectivity α, dimensionless, is used to characterize the selective permeability of a gas component in a membrane. The selectivity is the ratio of the permeances of two gases in the membrane.

Breaking strength is tested with Instron 3342 according to Standard ASTMD882.

### Example 1

This example provided a hollow fiber membrane prepared using the method of the present invention.
(1) polybenzimidazole A5, ethanol and hydrochloric acid were added into methanesulfonic acid, stirring at 70 °C and 0 MPa (gauge pressure) for 24 h to achieve uniformly mixing to prepare a mixed feed liquid (casting solution); wherein mass contents: 10wt% of polybenzimidazole, 3wt% of ethanol, 3wt% of hydrochloric acid and 84wt% of methanesulfonic acid;
   the structural unit of polybenzimidazole A5 being shown below: 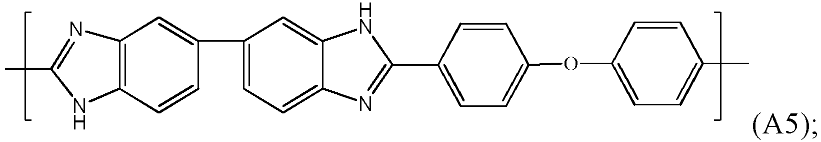
   wherein the polybenzimidazole A5 had a number-average molecular weight of 5.6×10⁴;
(2) the mixed feed liquid was heated to 240 °C and was extruded into the spinneret by double-screw extruder, wherein the spinneret shown in FIG. 1 was used; the support was polyester fiber braided tube; the casting solution contacted with the braided tube in the spinneret (the height of cavity of the spinneret being 10 cm) through concentric circle composite spinning technology, wherein the contact time was 10s and the pressure was 0.1 MPa; the support was pulled through the spinneret from bottom to top, and then the support passed through the annular doctor blade; the thickness of the polybenzimidazole primary film was controlled to be 200 µm, so that polybenzimidazole primary film attached to the support was obtained; excess casting solution flowed out through the casting solution outlet, and a portion of the casting solution permeated into the support;
(3) the polybenzimidazole primary film was pulled out for 100cm in 100 °C air bath and then was cut, and was continuously placed in 100 °C air bath for 50 minutes, so as to form polybenzimidazole selective layer with a dense structure;
(4) ethanol was introduced into the inner tube of the support through the core tube, inducing phase separation to promote the non-solvent induced phase separation of the portion of the casting solution permeated into the support to generate the transition layer with a porous structure; and then the solvent in the primary film was completely volatilized in an oven at 110 °C to prepare the finished membrane - hollow fiber membrane.

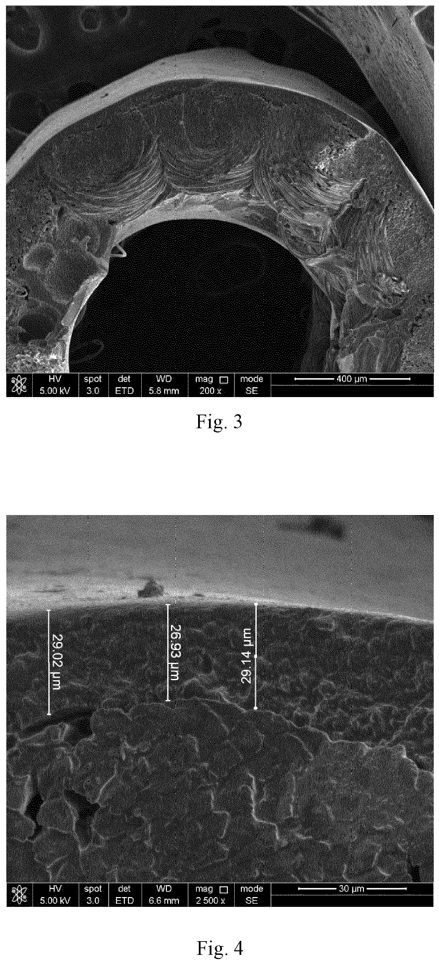

The thickness of the selective layer of the produced hollow fiber membrane is about 27-29 µm; referring to FIG. 4, FIG. 4 is a cross-sectional SEM image of the selective layer of the hollow fiber membrane prepared in Example 1 of the present invention. The transition layer is embedded in the support and the thickness is about 380 µm (in Example 1 the transition layer further extends inwardly from the inner surface of the support, and therefore the support is slightly thicker), and the thickness of the embedded layer exceeds the thickness of the wall of the support.

The breaking strength of the hollow fiber membrane prepared in Example 1 is 160 MPa; under the test pressure of 0.5MPa and at 100 °C, the pure helium permeance is 3.48GPU, the pure hydrogen permeance is 3.03GPU, and the nitrogen permeance and the methane permeance are respectively 0.016GPU and 0.0135 GPU; the hydrogen/nitrogen and hydrogen/methane selectivities are 189 and 224, respectively.

FIG. 3 is an overview cross-sectional SEM image of the hollow fiber membrane prepared in Example 1 of the present invention; as can be seen from FIG. 3, the selective layer is located at the outer surface of the membrane, and the transition layer is embedded into the support and tightly combined with PBI membrane.

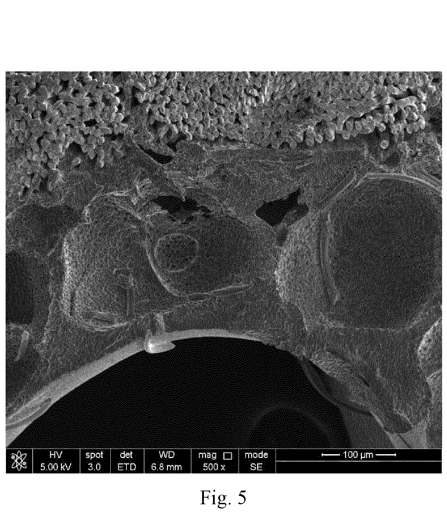

FIG. 5 is a cross-sectional SEM image of the inner surface of the hollow fiber membrane prepared in Example 1 of the present invention; as can be seen from FIG. 5, the support is embedded into the transition layer, and the inner surface of the transition layer is of a microporous structure.

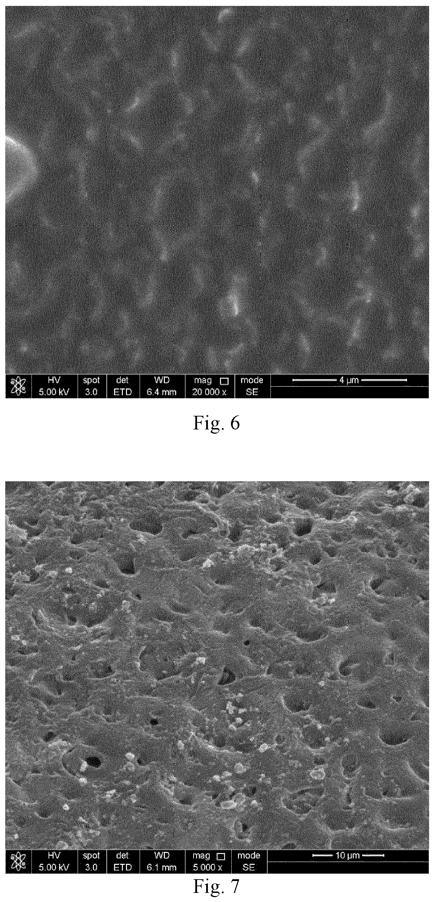

FIG. 6 is an SEM image of the outer surface of the hollow fiber membrane prepared in Example 1 of the present invention; as can be seen from FIG. 6, the outer surface is of a dense structure.

FIG. 7 is an SEM image of the inner surface of the novel hollow fiber membrane prepared in Example 1 of the present invention; as can be seen from FIG. 7, the inner surface is the transition layer with a microporous structure.

### Example 2

This example provided a hollow fiber membrane prepared using the method of the present invention.
(1) polybenzimidazole A6, ethanol and tetrahydrofuran were mixed with methanesulfonic acid, stirring at 80 °C and 0.5 MPa pressure for 24 h to achieve uniformly mixing to prepare a mixed feed liquid (casting solution); wherein mass contents: 10wt% of polybenzimidazole, 2wt% of ethanol, 2wt% of tetrahydrofuran and 86wt% of methanesulfonic acid;
   the structural unit of polybenzimidazole A6 being shown below: 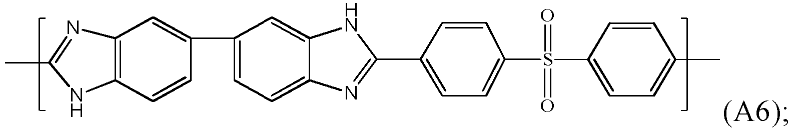
   wherein the polybenzimidazole A6 had a number average molecular weight of 7.2×10⁴;
(2) the mixed feed liquid was heated to 180 °C and was extruded into the spinneret by gear pump, wherein the spinneret shown in FIG. 1 was used; the support was microporous polypropylene membrane prepared by thermally induced phase separation; the casting solution contacted with the polypropylene microporous membrane in the spinneret (the height of cavity of the spinneret being 10 cm) through concentric circle composite spinning technology, wherein the contact time was 10s and the pressure was 0.4 MPa; the support was pulled through the spinneret from bottom to top, and then the support passed through the annular doctor blade; the thickness of the polybenzimidazole primary film was controlled to be 100 µm, so that polybenzimidazole primary film attached to the support was obtained; excess casting solution flowed out through the casting solution outlet, and a portion of the casting solution permeated into the support;
(3) the polybenzimidazole primary film was pulled out for 200cm in 100 °C air bath and then was cut, and was continuously placed in 100 °C air bath for 40 minutes, so as to form polybenzimidazole selective layer with a dense structure;
(4) ethanol was introduced into the inner tube of the support through the core tube, inducing phase separation to promote the non-solvent ethanol induced phase separation of the portion of the casting solution permeated into the support to generate the transition layer with a porous structure; and then the solvent in the primary film was completely volatilized in an oven at 100 °C to prepare the finished membrane-hollow fiber membrane.

The average thickness of the produced hollow fiber membrane is about 200 µm; the thickness of the selective layer is about 2-5 µm; and the transition layer is embedded into the support and has a thickness of about 200 µm.

The breaking strength of the hollow fiber membrane prepared is 155 MPa; under the test pressure of 0.5MPa and at 100 °C, the pure helium permeance is 7.5GPU, the pure hydrogen permeance is 6.8GPU, and the nitrogen permeance and the methane permeance are respectively 0.04GPU and 0.04GPU; the helium/nitrogen and helium/methane selectivities are 187.5 and 170, respectively.

### Example 3

This example provided a hollow fiber membrane prepared using the method of the present invention.
(1) polybenzimidazole A4 was mixed with methanesulfonic acid, stirring at 150 °C and 1.0 MPa pressure for 24 h to achieve uniformly mixing to prepare a mixed feed liquid (casting solution); wherein mass contents: 18wt% of polybenzimidazole and 82wt% of methanesulfonic acid;
   the structural unit of polybenzimidazole A4 being shown below: 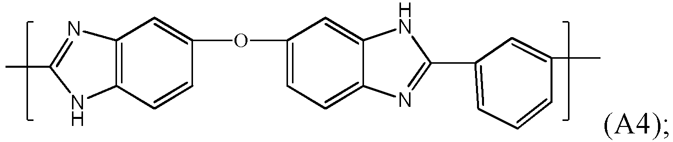
   wherein the polybenzimidazole A4 had a number average molecular weight of 6.8×10⁴;
(2) the mixed feed liquid was heated to 100 °C and was extruded into the spinneret by gear pump, wherein the spinneret shown in FIG. 1 was used; the support was microporous polypropylene membrane (prepared by thermally induced phase separation); the casting solution contacted with the support in the spinneret (the height of cavity of the spinneret being 10 cm) through concentric circle composite spinning technology, wherein the contact time of the casting solution with the support was 2s and the pressure was 0.5 MPa; the support was pulled through the spinneret from bottom to top, and then the support passed through the annular doctor blade; the thickness of the polybenzimidazole primary film was controlled to be 100 µm, so that polybenzimidazole primary film attached to the support was obtained; excess casting solution flowed out through the casting solution outlet, and a portion of the casting solution permeated into the support;
(3) the polybenzimidazole primary film was pulled out for 200cm in 150 °C air bath and then was cut, and was continuously placed in 150 °C air bath for 50 minutes, so as to form polybenzimidazole selective layer with a dense structure;
(4) water was introduced into the inner tube of the support through the core tube, inducing non-solvent induced phase separation of the not yet phase-separated primary film, to promote the non-solvent induced phase separation of the portion of the casting solution permeated into the support to generate the transition layer with a porous structure; and then the solvent in the primary film was completely volatilized in an oven at 120 °C to prepare the finished membrane-hollow fiber membrane.

The thickness of the selective layer of the produced hollow fiber membrane is about 45~50 µm; and the transition layer is embedded into the support and has a thickness of about 450 µm.

The breaking strength of the hollow fiber membrane prepared is 206 MPa; under the test pressure of 0.5MPa and at 100 °C, the pure helium permeance is 0.87GPU, the pure hydrogen permeance is 0.81GPU, and the nitrogen permeance and the methane permeance are respectively 0.005GPU and 0.004GPU; the hydrogen/nitrogen and hydrogen/methane selectivities are 162 and 202.5, respectively.

### Example 4

This example provided a hollow fiber membrane prepared using the method of the present invention.
(1) polybenzimidazole A8 and ethanol were mixed with methanesulfonic acid, stirring at 60 °C and normal pressure for 24 h to achieve uniformly mixing to prepare a mixed feed liquid (casting solution); wherein mass contents: 4wt% of polybenzimidazole, 10wt% of ethanol, and 86wt% of methanesulfonic acid;
   the structural unit of polybenzimidazole A8 being shown below: 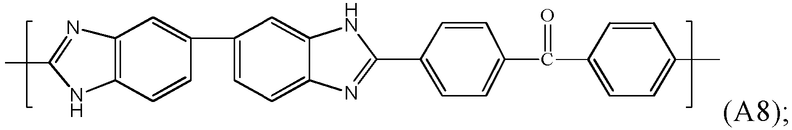
   wherein the polybenzimidazole A8 had a number average molecular weight of 9.7×10⁴;
(2) the mixed feed liquid was heated to 80 °C and was extruded into the spinneret by gear pump, wherein the spinneret shown in FIG. 1 was used; the support was polypropylene fiber braided tube prepared by braiding polypropylene fibers; the casting solution contacted with the support in the spinneret (the height of cavity of the spinneret being 10 cm) through concentric circle composite spinning technology, wherein the contact time of the casting solution with the braided tube was 10s and the contact pressure was 0.05 MPa; the support was pulled through the spinneret from bottom to top, and then the support passed through the annular doctor blade; the thickness of the polybenzimidazole primary film was controlled to be 100 µm, so that polybenzimidazole primary film attached to the support was obtained; excess casting solution flowed out through the casting solution outlet, and a portion of the casting solution permeated into the support;
(3) the tube was cut after the length of the polybenzimidazole primary film reached 200cm and was transferred into 150 °C air bath for drying for 10 minutes, so as to form polybenzimidazole selective layer with a dense structure;
(4) ethanol was introduced into the inner tube of the support through the core tube, inducing phase separation to promote the non-solvent induced phase separation of the portion of the casting solution permeated into the support to generate the transition layer with a porous structure; and then the solvent in the primary film was completely volatilized in an oven at 110 °C to prepare the finished membrane-hollow fiber membrane.

The thickness of the selective layer of the produced hollow fiber membrane is 400~600 nm, with a relatively obvious transitional region; and the transition layer is embedded into the support and has a thickness of 200-400 µm, with some parts extending through the support.

The breaking strength of the hollow fiber membrane prepared is 161 MPa; under the test pressure of 0.5MPa and at 100 °C, the pure helium permeance is 107GPU, the pure hydrogen permeance is 95GPU, and the nitrogen permeance and the methane permeance are respectively 0.45GPU and 0.41GPU; the hydrogen/nitrogen and hydrogen/methane selectivities are 211 and 231.7, respectively.

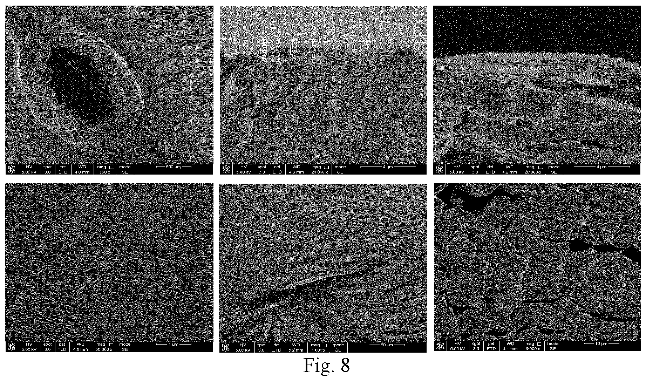

FIG. 8 shows SEM images of the hollow fiber membrane prepared in Example 4; from left to right and from top to bottom, the images of the overall section, the selective layer and the transition layer, the enlarged selective layer and transition layer, the outer surface, the inner surface (the transition layer being porous) and the section of the support are respectively arranged.

### Example 5

This example provided a hollow fiber membrane prepared using the method of the present invention.
(1) polybenzimidazole A7 and ethanol were mixed with methanesulfonic acid, stirring at 60 °C and normal pressure for 72 h to achieve uniformly mixing to prepare a mixed feed liquid (casting solution); wherein mass contents: 4wt% of polybenzimidazole, 1wt% of ethanol, and 95wt% of methanesulfonic acid;
   the structural unit of polybenzimidazole A7 being shown below: 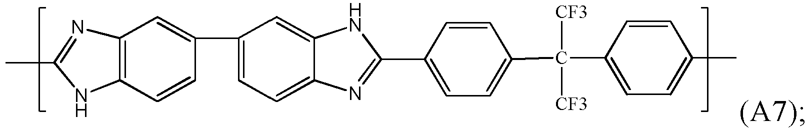
   wherein the polybenzimidazole A7 had a number average molecular weight of 28.7× 10⁴;
(2) the mixed feed liquid was heated to 80 °C and was extruded into the spinneret by gear pump, wherein the spinneret shown in FIG. 1 was used; the support was microporous polypropylene hollow fiber membrane (average pore size 0.01 µm, porosity 65%, outer surface contact angle 75 °; preparation method thereof: stirring and heating 25wt% of polypropylene resin, 0.5wt% of maleic anhydride grafted polypropylene, 0.5wt% of polyvinylpyrrolidone and 74wt% of soybean oil at 185 °C to obtain a homogeneous casting solution; after vacuum defoaming and filtering, feeding the casting solution to a hollow spinneret using soybean oil as bore fluid and then entering into soybean oil for cooling and solidifying; extracting with acetone and air natural drying to obtain the microporous polypropylene hollow fiber membrane); the casting solution contacted with the microporous polypropylene membrane (prepared by thermally induced phase separation) in the spinneret (the height of cavity of the spinneret being 10 cm) through concentric circle composite spinning technology, wherein the contact time of the casting solution with the support was 10s and the contact pressure was 0.1 MPa; the support was pulled through the spinneret from bottom to top, and then the support passed through the annular doctor blade; the thickness of the polybenzimidazole primary film was controlled to be 100 µm, so that polybenzimidazole primary film attached to the support was obtained; excess casting solution flowed out through the casting solution outlet, and a portion of the casting solution permeated into the support;
(3) the polybenzimidazole primary film was pulled out for 100cm in 150 °C air bath and then was cut, and was continuously dried in 150 °C air bath for 100 minutes, so as to form polybenzimidazole selective layer with a dense structure;
(4) ethanol was introduced into the inner tube of the support through the core tube, inducing phase separation to promote the non-solvent induced phase separation of the portion of the casting solution permeated into the support to generate the transition layer with a porous structure; and then the solvent in the primary film was completely volatilized in an oven at 110 °C to prepare the finished membrane-hollow fiber membrane.

The average thickness of the produced hollow fiber membrane is about 350 µm; the average thickness of the selective layer is about 1.2-2.0 µm; and the transition layer is embedded into the support and has a thickness of about 30 µm.

The breaking strength of the hollow fiber membrane prepared is 63 MPa; under the test pressure of 0.5MPa and at 100 °C, the pure helium permeance is 88.9GPU, the pure hydrogen permeance is 76.1GPU, and the nitrogen permeance and the methane permeance are respectively 0.66GPU and 0.52GPU; the hydrogen/nitrogen and hydrogen/methane selectivities are 134.7 and 170.9, respectively.

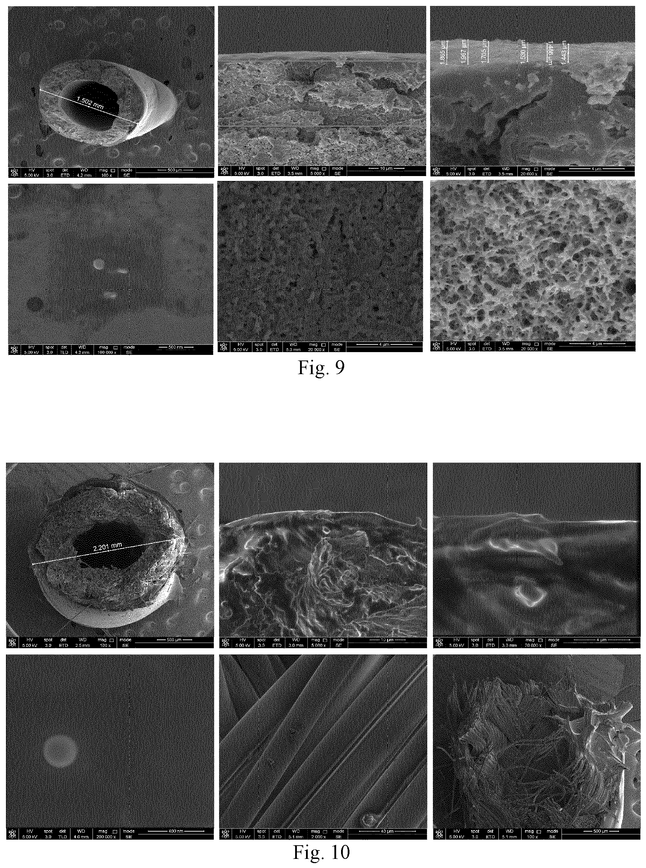

FIG. 9 shows SEM images of the hollow fiber membrane prepared in Example 5; from left to right and from top to bottom, the images of the overall section, the selective layer and the transition layer, the enlarged selective layer and transition layer, the outer surface, the inner surface and the section of the support are respectively arranged.

### Example 6

This example provided a hollow fiber membrane prepared using the method of the present invention.
(1) polybenzimidazole A1 and tetrahydrofuran were mixed with methanesulfonic acid, stirring at 60 °C and normal pressure for 72 h to achieve uniformly mixing to prepare a mixed feed liquid (casting solution); wherein mass contents: 8wt% of polybenzimidazole, 2wt% of tetrahydrofuran and 90wt% of methanesulfonic acid;
   the structural unit of polybenzimidazole A1 being shown below: 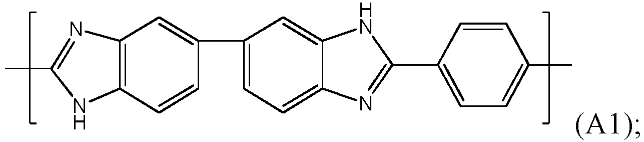
   wherein the polybenzimidazole A1 had a number average molecular weight of 8.7×10⁴;
(2) the mixed feed liquid was heated to 80 °C and was extruded into the spinneret by gear pump, wherein the spinneret shown in FIG. 1 was used; the support was microporous polyethylene membrane (prepared by melt spinning stretching method; pore size 1-10 µm, and porosity 65-80%); the casting solution contacted with the microporous polyethylene membrane in the spinneret (the height of cavity of the spinneret being 10 cm) through concentric circle composite spinning technology, wherein the contact time was 10s and the contact pressure was 0.2 MPa; the support was pulled through the spinneret from bottom to top, and then the support passed through the annular doctor blade; the thickness of the polybenzimidazole primary film was controlled to be 80 µm, so that polybenzimidazole primary film attached to the support was obtained; excess casting solution flowed out through the casting solution outlet, and a portion of the casting solution permeated into the support;
(3) the polybenzimidazole primary film was pulled out for 100cm in 150 °C air bath and then was cut, and was placed in 150 °C air bath for drying for 100 minutes, so as to form polybenzimidazole selective layer with a dense structure;
(4) tetrahydrofuran was introduced into the inner tube of the support through the core tube, inducing phase separation to promote the non-solvent tetrahydrofuran induced phase separation of the portion of the casting solution permeated into the support to generate the transition layer with a porous structure; and then the solvent in the primary film was completely volatilized in an oven at 110 °C to prepare the finished membrane-hollow fiber membrane.

The thickness of the selective layer of the produced hollow fiber membrane is about 2000nm; and the transition layer is embedded into the support and has a thickness of about 180-190 µm (average thickness about 185 µm).

The breaking strength of the hollow fiber membrane prepared is 52 MPa; under the test pressure of 0.5MPa and at 100 °C, the pure helium permeance is 82.2GPU, the pure hydrogen permeance is 79.6GPU, and the nitrogen permeance and the methane permeance are respectively 0.68GPU and 0.55GPU; the hydrogen/nitrogen and hydrogen/methane selectivities are 120.61 and 144.7, respectively.

### Example 7

This example provided a hollow fiber membrane prepared using the method of the present invention.
(1) polybenzimidazole A7 and tetrahydrofuran were mixed with methanesulfonic acid, stirring at 60 °C and normal pressure for 24 h to achieve uniformly mixing to prepare a mixed feed liquid (casting solution); wherein mass contents: 8wt% of polybenzimidazole, 2wt% of tetrahydrofuran and 90wt% of methanesulfonic acid;
   the structural unit of polybenzimidazole A7 being shown below: 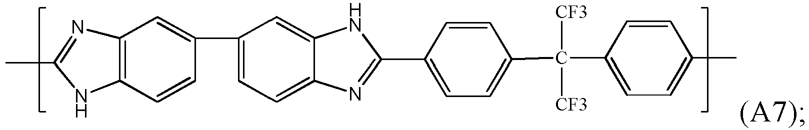
   wherein the polybenzimidazole A7 had a number average molecular weight of 12.6×10⁴;
(2) the mixed feed liquid was heated to 80 °C and was extruded into the spinneret by gear pump, wherein the spinneret shown in FIG. 1 was used; the support was microporous polyethylene hydrophobic membrane with porosity 60-80%(prepared by melt spinning stretching method); the casting solution contacted with the microporous polyethylene hydrophobic membrane in the spinneret (the height of cavity of the spinneret being 10 cm) through concentric circle composite spinning technology, wherein the contact time was 10s and the contact pressure was controlled to be 0.1 MPa; the support was pulled through the spinneret from bottom to top, and then the support passed through the annular doctor blade; the thickness of the polybenzimidazole primary film was controlled to be 80 µm, so that polybenzimidazole primary film attached to the support was obtained; excess casting solution flowed out through the casting solution outlet, and a portion of the casting solution permeated into the support;
(3) the polybenzimidazole primary film was pulled out for 100cm in 150 °C air bath and then was cut, and was placed in 150 °C air bath for drying for 100 minutes, so as to form polybenzimidazole selective layer with a dense structure;
(4) tetrahydrofuran was introduced into the inner tube of the support through the core tube, inducing phase separation to promote the non-solvent tetrahydrofuran induced phase separation of the portion of the casting solution permeated into the support to generate the transition layer with a porous structure; and then the solvent in the primary film was completely volatilized in an oven at 110 °C to prepare the finished membrane-hollow fiber membrane.

The thickness of the selective layer of the produced hollow fiber membrane is about 10-12 µm; and the transition layer is embedded into the support and has a thickness of about 300 µm.

The breaking strength of the hollow fiber membrane prepared is 52 MPa; under the test pressure of 0.5MPa and at 100 °C, the pure helium permeance is 22.6GPU, the pure hydrogen permeance is 22.1GPU, and the nitrogen permeance and the methane permeance are respectively 0.16GPU and 0.13GPU; the helium/nitrogen and helium/methane selectivities are 141.4 and 173.8, respectively.

### Comparative Example 1

(1) polybenzimidazole A1 was mixed with methanesulfonic acid, stirring at 150 °C and 1.0 MPa pressure for 24 h to achieve uniformly mixing to prepare a mixed feed liquid (casting solution); wherein mass contents: 10wt% of polybenzimidazole and 90wt% of methanesulfonic acid;
   the structural unit comprised by polybenzimidazole A1 being shown below: 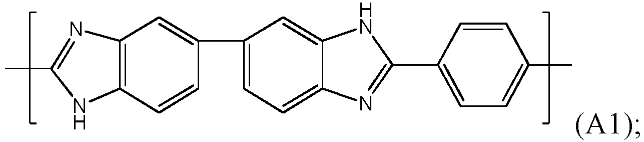
   wherein the polybenzimidazole A1 had a number average molecular weight of 6.8×10⁴;
(2) the mixed feed liquid was heated to 140 °C and was extruded into the spinneret by gear pump, wherein the spinneret shown in FIG. 1 was used; the casting solution contacted with polyester fiber braided tube in the spinneret (the height of cavity of the spinneret being 10 cm) through concentric circle composite spinning technology and the spinning was carried out at 140 °C, wherein the contact time of the casting solution with the braided tube was 2s and the contact pressure was 0.05 MPa; the support was pulled through the spinneret from bottom to top, and then the support passed through the annular doctor blade; the thickness of the polybenzimidazole primary film was controlled to be 100 µm, so that polybenzimidazole primary film attached to the support was obtained; excess casting solution flowed out through the casting solution outlet, and a portion of the casting solution permeated into the support; when the polybenzimidazole primary film reached the length of 200 cm, it was transferred into an oven;
(3) the solvent in the polybenzimidazole primary film was completely volatilized directly in the oven at 200 °C, and the residual solvent was removed through water washing and ethanol washing steps to form the finished membrane-hollow fiber membrane.

The selective layer of the produced hollow fiber membrane is thick; there is no porous transition layer, and the selective layer is directly attached to the support on the outer surface of the support. The membrane has poor binding between the selective layer and the support due to the absent of transition layer, so that the selective layer is easy to fall off and the service life is shortened. When the internal pressure exceeds 0.04MPa, the selective layer is damaged; when external pressure operation is adopted, the service life is only 2000-5000 hours after multiple times of pressure change.

The breaking strength of the hollow fiber membrane prepared is 166 MPa; under the test pressure of 0.5MPa and at 100 °C, the pure helium permeance is 12.8GPU, the pure hydrogen permeance is 11.6GPU, and the nitrogen permeance and the methane permeance are respectively 0.11GPU and 0.10GPU; the hydrogen/nitrogen and hydrogen/methane selectivities are 105 and 116, respectively.

Fig. 10 shows SEM images of the hollow fiber membrane prepared in Comparative Example 1; from left to right and from top to bottom, the images of the overall section, the selective layer, the enlarged selective layer, the outer surface, the inner surface and the section of the support are respectively arranged.

### Comparative Example 2

(1) polybenzimidazole A7 was mixed with methanesulfonic acid, stirring at 150 °C and 1.0 MPa pressure for 24 h to achieve uniformly mixing to prepare a mixed feed liquid (casting solution); wherein mass contents: 10wt% of polybenzimidazole and 90wt% of methanesulfonic acid;
   the structural unit of polybenzimidazole A7 being shown below: 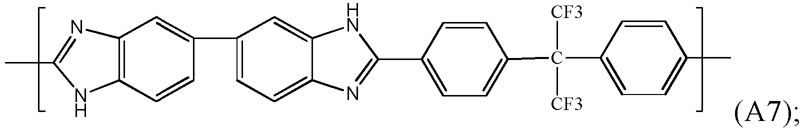
   wherein the polybenzimidazole A7 had a number average molecular weight of 12.6×10⁴;
(2) the mixed feed liquid was extruded out by gear pump, wherein the spinneret shown in FIG. 1 was used; the casting solution contacted with nylon braided tube in the spinneret (the height of cavity of the spinneret being 10 cm) through concentric circle composite spinning technology and the spinning was carried out at 140 °C, wherein the contact time of the casting solution with the braided tube was 2s and the contact pressure was 0.1 MPa; the thickness of the polybenzimidazole primary film was controlled to be 30 µm through the annular doctor blade; when the length reached 200 cm, it entered pure water coagulation bath, and was winded at winding speed of 5 cm/min;
(3) then in the pure water bath the solvent in the primary film was transferred into water, and residual solvent was removed through water washing and ethanol washing steps to form the finished membrane-hollow fiber membrane.

The average thickness of the produced hollow fiber membrane is about 600 µm; the thickness of the selective layer is about 500 nm; the outer diameter of the support is 1400 µm; the membrane has poor binding between the selective layer and the support, so that the selective layer is easy to fall off and the service life is shortened. When the internal pressure exceeds 0.05MPa, the selective layer is damaged.

In addition, the breaking strength of the hollow fiber membrane prepared is 166 MPa; under the test pressure of 0.5MPa and at 100 °C, the pure helium permeance is 28.5GPU, the pure hydrogen permeance is 27.6GPU, and the nitrogen permeance and the methane permeance are respectively 0.33GPU and 0.27GPU; the hydrogen/nitrogen and hydrogen/methane selectivities are 83.7 and 102.2, respectively.

### Comparative Example 3

(1) polybenzimidazole A7 was mixed with N-methylpyrrolidone (NMP), stirring at 50 °C and normal pressure for 24 h to achieve uniformly mixing to prepare a mixed feed liquid (casting solution); wherein mass contents: 10wt% of polybenzimidazole and 90wt% of NMP;
   the structural unit of polybenzimidazole A7 being shown below: 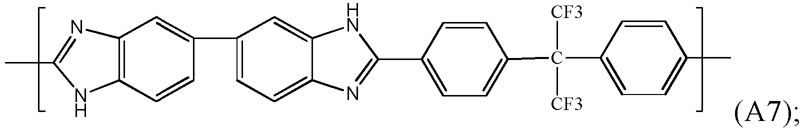
   wherein the polybenzimidazole A7 had a number average molecular weight of 12.6×10⁴;
(2) the mixed feed liquid was extruded out by gear pump, wherein the spinneret shown in FIG. 1 was used; the casting solution contacted with nylon braided tube in the spinneret (the height of cavity of the spinneret being 10 cm) through concentric circle composite spinning technology and the spinning was carried out at 60 °C, wherein the contact time of the casting solution with the braided tube was 2s and the contact pressure was 0.05 MPa; the thickness of the polybenzimidazole primary film was controlled to be 30 µm through the annular doctor blade; when the length reached 200 cm, it entered pure water coagulation bath, and was winded at winding speed of 5 cm/min;
(3) then in the pure water bath the solvent in the primary film was transferred into water to form the finished membrane, and residual solvent was removed through water washing and ethanol washing steps.

The thickness of the selective layer of the prepared hollow fiber membrane is about 200 nm, and the structure of the membrane is not dense, and the selectivity is low; when the internal pressure exceeds 0.1MPa, the selective layer is damaged.

In addition, the breaking strength of the hollow fiber membrane prepared is 165 MPa; under the test pressure of 0.5MPa and at 100 °C, the pure helium permeance is 107GPU, the pure hydrogen permeance is 89.5GPU, and the nitrogen permeance and the methane permeance are respectively 12.9GPU and 11.4GPU; the hydrogen/nitrogen and hydrogen/methane selectivities are 6.94 and 7.85, respectively.

### Helium Purification Example

The feed gas - helium-rich gas comprises: volume fraction of helium 20 volume%, volume fraction of methane 17 volume%, volume fraction of nitrogen 60 volume%, volume fraction of hydrogen 1 volume%, volume fraction of carbon dioxide 0.5 volume% and volume fraction of oxygen 1.5 volume%.

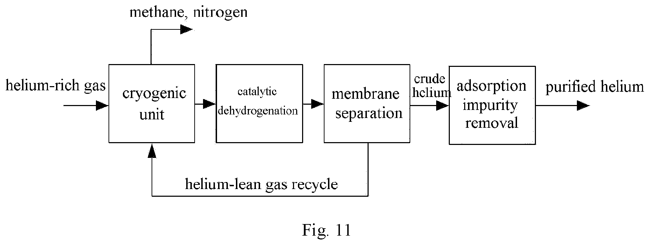

The helium-rich gas was purified, as shown in FIG. 11:
(1) the feed gas 1# firstly entered into cryogenic unit, wherein the temperature was -180 °C, and the pressure was 4MPa;
(2) the overhead gas 2# obtained in the step (1) entered into catalytic dehydrogenation unit, wherein a small amount of pure oxygen was introduced as combustion-supporting gas during the combustion process, so as to ensure that the catalytic reaction ran smoothly, wherein the catalyst was Pt and the temperature was 98 °C;
(3) the gas after combustion was dried 3#, and was fed into membrane unit, and was introduced into membrane components prepared by the hollow fiber membrane of Example 4 of the present application to carry out first stage and second stage membrane separation operations, wherein the positive pressure side operation pressures of the membrane separations were 3 MPa and 3 MPa, respectively;
(4) the helium-lean gas on the retentate side was sent back to the cryogenic unit, and the crude helium product 4# on the permeate side was sent to adsorption impurity removal unit for pressure swing adsorption operation, wherein the adsorbent which was a combination of 5A molecular sieve, coconut shell activated carbon and activated alumina was used, and the adsorption pressure was 10 MPa, so as to obtain purified helium 5#.

Wherein the gas composition at each stage of the helium purification process is shown in Table 1.

**TABLE 1**

| No.\composition% | Helium gas | Nitrogen gas | Methane | Oxygen gas | Hydrogen gas | CO₂ | Water |
|---|---|---|---|---|---|---|---|
| feed gas 1# | 20 | 60 | 17 | 1.5 | 1 | 0.5 | 0 |
| cryogenic separation 2# | 73.35 | 22.96 | 0.01 | 0.02 | 3.66 | 0 | 0 |
| catalytic dehydrogenation 3# | 75.32 | 23.57 | 0.01 | 1.07 | 0.02 | 0 | 0.01 |
| first stage membrane | 95.865 | 3.931 | 0.001 | 0.179 | 0.023 | 0 | 0.001 |
| second stage membrane 4# | 99.75 | 0.217 | 0 | 0.01 | 0.023 | 0 | 0 |
| product 5# | 99.995 | 0.005 | 0 | 0 | 0 | 0 | 0 |

Based on above table, it can be seen clearly that in present invention, helium concentration can be significantly increased by cryogenic process; the hydrogen which is difficult to separate from helium in mixed gas is effectively removed by catalytic oxidation section; the gas is further purified intensely through membrane separation to obtain crude helium gas having a concentration of 99.75%; and the crude helium gas is further treated by pressure swing adsorption, such that the helium concentration of the product obtained can reach 99.995%, meeting the 4N-grade standard.

The preferred embodiments of the present invention have been described in detail above, but the present invention is not limited thereto. Many simple modifications can be made to the technical solutions of the present invention within the scopes of the technical concepts of the present invention, including the combinations of various technical features in any other suitable manners. These simple modifications and combinations should also be deemed as the disclosures of the present invention, and all of them are covered by the protection scopes of the present invention.

## Claims

1. A hollow fiber membrane, **characterized in that** the hollow fiber membrane comprises a support, a selective layer, and a transition layer between the support and the selective layer, wherein at least a portion of the transition layer is embedded in the support.

2. The hollow fiber membrane of claim 1, wherein the transition layer and the selective layer comprise the same polymer; preferably, the transition layer and the selective layer comprise the same polymer and the transition layer and the selective layer are formed from the same casting solution; more preferably, the transition layer and the selective layer comprise the same polymer, the transition layer and the selective layer are formed from the same casting solution, and the transition layer and the selective layer are formed by non-solvent induced phase separation and thermally induced phase separation, respectively.

3. The hollow fiber membrane of any one of claims 1-2, wherein both the transition layer and the selective layer comprise polybenzimidazole; preferably, the polybenzimidazole has a number average molecular weight of 5×10⁴ to 30×10⁴, more preferably the polybenzimidazole has a number average molecular weight of 5.6×10⁴ to 28.7×10⁴.

4. The hollow fiber membrane of claim 3, wherein the polybenzimidazole comprises one or more structural units represented by formulas (A1) to (A8); 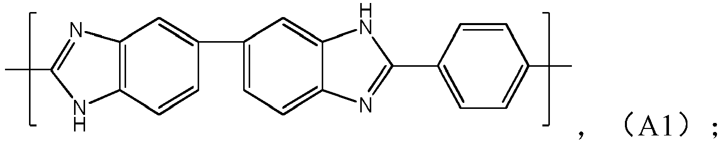 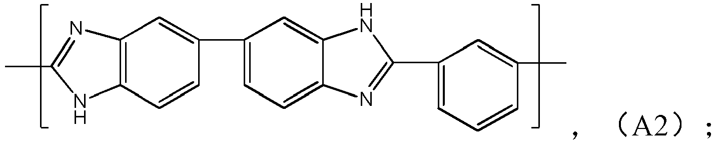 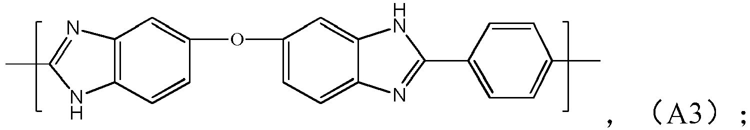 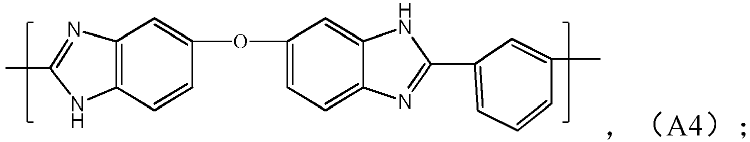 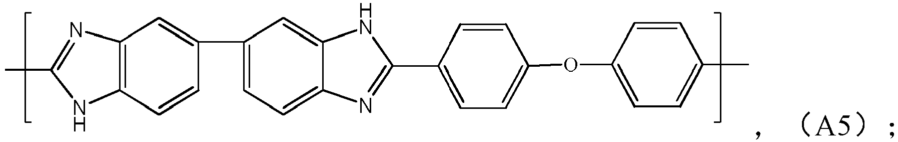 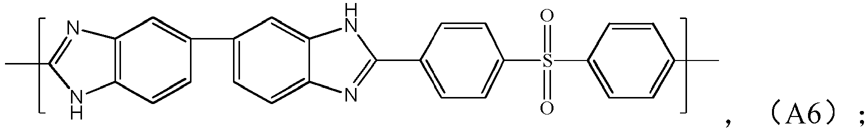 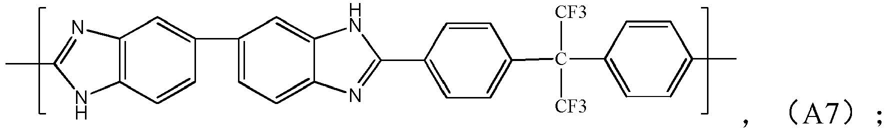 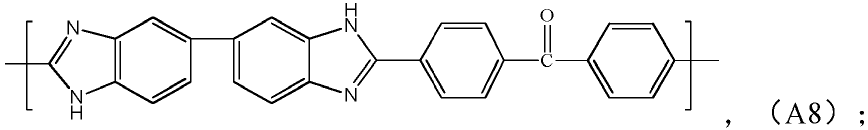 preferably, the polybenzimidazole comprises one or more structural units represented by formulas (A5) to (A8).

5. The hollow fiber membrane of any one of claims 1 to 4, wherein the support is a fiber braided tube or a hollow fiber membrane, preferably a microporous hollow fiber membrane, more preferably the support is one or more selected from the group consisting of a fiber braided tube, a microporous polypropylene hollow fiber membrane, a microporous polyethylene hollow fiber membrane and a microporous inorganic hollow fiber membrane; and/or
the transition layer has a porous structure; and/or
the transition layer is obtained by non-solvent induced phase separation of a casting solution, preferably the transition layer is obtained by non-solvent induced phase separation of a polybenzimidazole-containing acid solution.

6. The membrane according to any one of claims 1 to 5, wherein the average thickness of the hollow fiber membrane is 100-2000 µm; and/or
the average thickness of the tube wall of the support is 50-2000 µm;
and/or
the average thickness of the selective layer is 100-50000 nm; and/or
the average thickness of the transition layer is 20-2000 µm; and/or
the breaking strength of the membrane is 10-500 MPa; and/or,
the selectivity of hydrogen/nitrogen is 110-300 and the selectivity of hydrogen/methane is 125-360 at 100 °C and 0.5MPa test pressure; and/or
the selectivity of helium/nitrogen is 140-390 and the selectivity of helium/methane is 170-500 at 100 °C and 0.5MPa test pressure; and/or
the selectivity of hydrogen/nitrogen is 200-550 and the selectivity of hydrogen/methane is 200-860 at 25 °C and 0.5MPa test pressure; and/or
the selectivity of helium/nitrogen is 240-900 and the selectivity of helium/methane is 200-2000 at 25 °C and 0.5MPa test pressure.

7. A method for producing a hollow fiber membrane, **characterized in that** the method comprising:
(1) preparing a casting solution comprising a polymer;
(2) coating the casting solution onto a support, wherein a portion of the casting solution permeates into the support, so as to obtain a primary film coated on the support;
(3) heating the primary film to form a selective layer;
(4) injecting a bore fluid into the support to induce non-solvent induced phase separation of the casting solution permeated into the support to generate a transition layer; and
(5) optionally, heating to remove substantially all of the solvent after the generation of the transition layer.

8. The method of claim 7, wherein the casting solution is coated onto the support with a doctor blade, preferably an annular doctor blade; and/or
the support is pulled through the casting solution, preferably the support is pulled through the casting solution from bottom to top; and/or
the support is a fiber braided tube or a hollow fiber membrane, preferably a hollow fiber microporous membrane, more preferably the support is one or more selected from the group consisting of a fiber braided tube, a polypropylene hollow microporous membrane, a polyethylene hollow microporous membrane and an inorganic hollow microporous membrane.

9. The method of claim 7 or 8, wherein the casting solution is obtained by mixing the polymer, an acid, optionally a volatile solvent and optionally an additive; preferably, the mixing conditions include: temperature 25-160 °C, and time period 2-72 h.

10. The method of any one of claims 7-9, wherein the polymer is polybenzimidazole; preferably, the polybenzimidazole has a number average molecular weight of 5×10⁴ to 30×10⁴, more preferably the polybenzimidazole has a number average molecular weight of 5.6×10⁴ to 28.7×10⁴.

11. The method of claim 10, wherein the polybenzimidazole comprises one or more structural units represented by formulas (A1) to (A8); 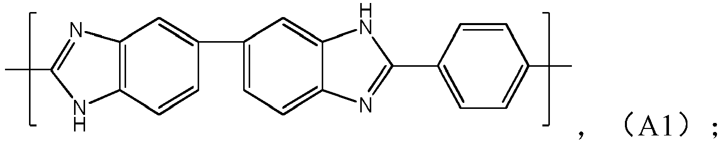 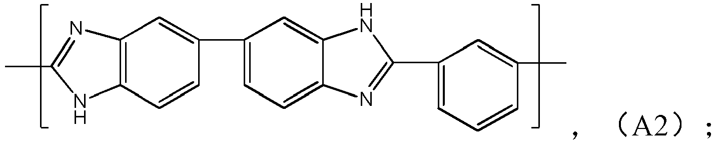 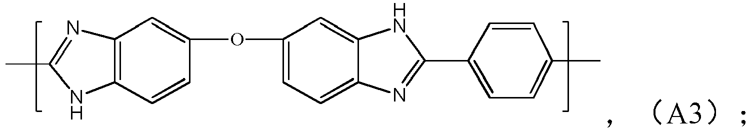 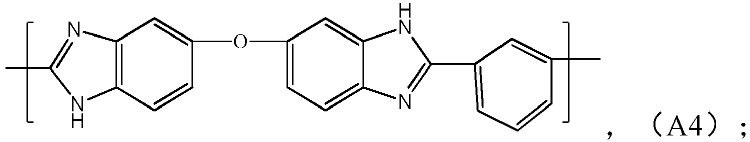 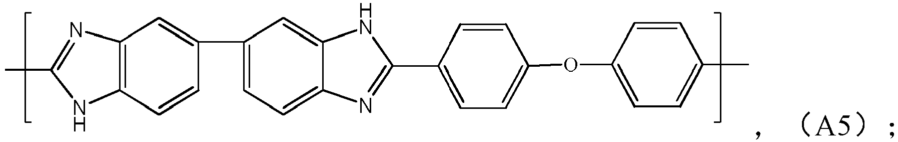 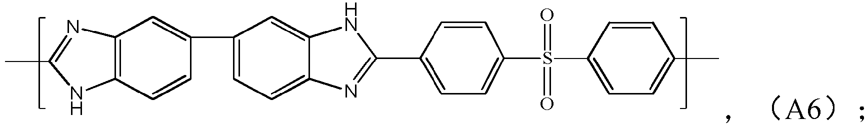 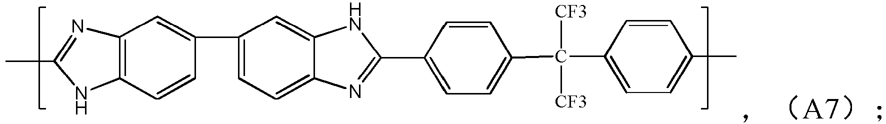 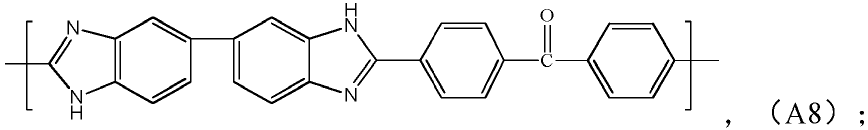 preferably, the polybenzimidazole comprises one or more structural units represented by formulas (A5) to (A8).

12. The method of claim 10, wherein the acid is a monoacid; preferably, the acid is selected from the group consisting of hydrochloric acid, hydrofluoric acid, methanesulfonic acid or a mixture thereof; and/or
the volatile solvent is selected from the group consisting of methanol, ethanol, tetrahydrofuran or a mixture thereof; and/or
the additive is selected from the group consisting of lithium nitrate, calcium chloride, sodium chloride, potassium chloride, polyethylene glycol, polyethylene oxide or a mixture thereof; and/or
the bore fluid is selected from the group consisting of water, ethanol, methanol, isopropanol, acetone, tetrahydrofuran or a mixture thereof; and/or
the amount of polybenzimidazole is 4-18wt%, the amount of the acid is 77-90wt%, the amount of the volatile solvent is 0-10wt%, and the amount of the additive is 0-5 wt%, based on the total weight of the casting solution.

13. The method of claim 10, wherein the coating conditions comprise: temperature 20-240 °C; and/or
the heating conditions in step (3) comprise: temperature100-280 °C; and/or
the contact time of the casting solution with the support is 1-15 seconds.

14. The method of any one of claims 7-13, wherein the coating in step (2) is conducted by using a spinneret, wherein the spinneret includes a support positioner, an annular doctor blade, and a core tube;
the support positioner forms a cavity around the support; the cavity is for storing the casting solution, and a casting solution inlet and a casting solution outlet are arranged on the cavity; and, one end of the cavity is connected to the support positioner to form a sealed end, and the other end of the cavity is provided with the annular doctor blade, wherein the diameter of the annular doctor blade is larger than the width of the support positioner; and
the core tube is positioned in the inner tube of the support.

15. The method of claim 7, wherein the hollow fiber membrane is the hollow fiber membrane of claim 1.

16. A hollow fiber membrane produced by the method of any one of claims 7-14.

17. Use of the hollow fiber membrane of any one of claims 1 to 6 and 16 for the separation of helium/nitrogen, helium/methane, hydrogen/nitrogen or hydrogen/methane.

18. A method for purifying helium from a helium-containing gas, **characterized in that** the method comprising performing membrane separation using the hollow fiber membrane of any one of claims 1 to 6 and 16.

19. The method of claim 18, wherein the method comprises: carrying out condensation treatment through a cryogenic process, catalytic dehydrogenation treatment, membrane separation treatment and pressure swing adsorption impurity removal treatment on the helium-containing gas so as to obtain purified helium.

20. The method of claim 19, wherein the conditions of the condensation treatment comprise: temperature ≥-220 °C; preferably, the conditions of the condensation treatment comprise: temperature of -210 °C to -150 °C, and pressure of 0.2 MPa to 10 MPa; more preferably, the conditions of the condensation treatment comprise: temperature of -180 °C to -150 °C, and pressure of 3-10 MPa; and/or
wherein the conditions of the catalytic dehydrogenation treatment comprise: temperature 60-120 °C, preferably 60-110 °C; and/or
wherein the catalytic dehydrogenation treatment is carried out in the presence of oxygen and a catalyst, wherein the catalyst is a noble metal catalyst; preferably, the catalyst is selected from the group consisting of Pt, Pb, Rh, Ru or Au; more preferably, the catalyst is selected from the group consisting of Pt, Pb or Au; and/or
wherein the conditions of the membrane separation treatment comprise: membrane separation positive pressure side pressure being greater than membrane separation permeation side pressure; preferably, the membrane separation positive pressure side pressure is 0.2-10M Pa, more preferably, the membrane separation positive pressure side pressure is 0.5-10M Pa; and/or
wherein, the conditions of the pressure swing adsorption impurity removal treatment comprise: adsorption pressure 0.2-15 MP a, preferably 10-15 MP a; and/or
wherein the adsorbent used in the pressure swing adsorption impurity removal treatment is selected from one or more of the group consisting of activated carbon, molecular sieve, Metal Organic Framework (MOF) material and activated alumina.
